# EUROPEAN PATENT APPLICATION

(11) **EP 2 494 898 A1**
(43) Date of publication of application: **05.09.2012**
(21) Application number: 12156750.7
(22) Date of filing: 23.02.2012
(51) Int. Cl.: A47J 45/07

(54) **Barbeque pan with removable handle**

(30) Priority: 03.03.2011 US 201113040113
(71) Applicant: Williams-Sonoma, Inc., San Francisco, CA 94109 (US)
(72) Inventor: Degnan, Peter Jason, El Cerrito, CA 94530 (US)
(74) Representative: Lawrence, John

(57) **Abstract**

A barbecue pan (10) having a body portion (11). The body portion is characterized as having side walls (20) and a substantially planar mesh base (19) extending therefrom. A receiving element (14) extends from the body portion and a handle (13) is provided which is removably appended to the receiving element.

## Description

### TECHNICAL FIELD

The present invention involves a pan uniquely designed to be employed for cooking food products on a barbecue grill. The present pan overcomes a number of limitations inherent in barbecuing food products which are not suited for cooking directly upon the grilling surface.

### BACKGROUND OF THE INVENTION

Individuals that use barbecue grills for outdoor cooking oftentimes are faced with the dilemma of how to use the grill to cook diced or finely separated food items which would drop through grill openings and onto the heat source unless special precautions were taken. U.S. Patent No. 4,510,855 describes a sheet that can be clipped onto a standard barbecue grill having small openings to prevent food products from passing therethrough. U.S. Patent No. 2,846, 941 discloses a barbecue basket which is designed to contain food items mounted on a spit. Charcoal Champion sells its Barbecue Grilling Grid in the form of a flat sheet with diamond-shaped openings and an upturned edge for this purpose.

There are, however, limitations in all barbecuing implements designed to expand the barbecuing experience to include the cooking of small food items which would otherwise slip through the barbecue grill. Mesh baskets such as those described in U.S. Patent No. 5,560,286 are designed for this purpose. However, this rectangularly-based basket will reach very high temperatures as it is employed atop a grilling surface. One must be quite cautious in handling this basket to prevent injury. This situation is particularly challenging in recognizing that a user would handle the basket not only to remove it from the grilling surface but also would often times shake, rotate or reposition the basket to ensure that food items contained therein are evenly cooked preventing those items situated at the bottom of the basket from cooking more rapidly than those residing above them.

If one was to employ a mesh pan or basket having a handle, at least two additional concerns are introduced which, to date, are without solution. Specifically, if a handle was to be appended to a grilling pan or device, during the cooking process, the handle would not only become dangerously hot but if charcoal was used as the heat source, the handle could become permanently discolored. Further, many barbecue grilling devices are provided with removable tops or lids. These tops or lids are extremely useful in controlling cooking temperatures while enabling one to bake as well as grill food products. However, if a barbecue pan or basket was to be employed with a handle, the composite pan/basket and handle would generally extend outwardly from the grilling surface to prevent closure of the lid.

It is thus an object of the present invention to provide a suitable mesh pan which is capable of providing a convenient means for cooking small food items and yet overcomes the limitations of the prior art.

These and other advantages will be more readily apparent when considering the following disclosure and appended claims.

### SUMMARY OF THE INVENTION

A barbecue pan having a body portion. The body portion is characterized as having side walls and a substantially planar mesh base extending therefrom. A receiving element extends from the body portion and a handle is provided which is removably appended to the receiving element.

According to one embodiment of the invention, a barbecue pan comprises a body portion, said body portion having side walls and a substantially planar mesh base extending therefrom, a receiving element extending from said body portion and a handle removably appended to said receiving element.

Said side walls may also be composed of mesh material.

The barbecue pan may further comprise a lid. The lid may also be composed of mesh material.

The body portion may also be composed of material that is resistant to heat generated at barbecue cooking temperatures.

The handle may be detachable from said receiving element by employing a single hand of a user.

According to another embodiment of the invention, a barbecue pan comprises a body portion, said body portion having side walls and a substantially planar mesh base extending therefrom, a receiving element extending from said body portion, said receiving element having a slot configured therein and a handle having a handle base portion removably appended to said receiving element, said handle being provided with a spring-loaded lever and an extending lip selectively moveable from said handle base portion by applying pressure to said spring loaded lever for selectively engaging and withdrawing said extending lip into and out of said slot.

The side walls may also be composed of mesh material.

The handle may be secured to said body portion when said handle base portion is received by said receiving element and said extending lip extends within said slot.

The handle may be removable from said body portion when said spring-loaded lever is depressed and said extending lip is withdrawn from said slot.

According to another embodiment of the invention, a barbecue pan comprises a body portion and a lid, said body portion having side walls and a substantially planar mesh base extending therefrom, a receiving element extending from said body portion, said receiving element having a slot configured therein and a handle having a handle base portion removably appended to said receiving element, said lid sized to fit atop said body portion and having a first lid projection extending therefrom, said handle being provided with a first spring-loaded lever and first extending lip selectively moveable from said handle base portion by applying pressure to said first spring-loaded lever for selectively engaging and withdrawing said first extending lip into and out of said slot and a second spring-loaded lever and second extending lip selectively moveable from said handle base portion by applying pressure to said second spring-loaded lever for selectively engaging said second extending lip within said first lid projection.

The side walls may also be composed of mesh material.

The lid may be fixed to said body portion when said second extending lip engages said first lid projection.

The lid may further comprise a second lid projection extending diametrically opposite said first lid projection.

The body portion may be provided with an extension positioned to receive said second lid projection when said first lid projection is aligned with said handle.

The second lid projection may be pivotal within said extension when said second extending lip disengages from said first lip projection.

According to another aspect the invention comprises a method of barbecuing food products, said method comprising providing a barbecue grill having a heat source and grilling surface and a barbecue pan comprising a body portion having side walls and a substantially planar mesh base extending therefrom, a receiving element extending from said body portion and a handle removably appended to said receiving element, said body portion being sized to reside upon said grilling surface and within said barbecue grill, introducing said food products to said barbecue pan and placing said barbecue pan upon said barbecue grill and removing said handle from said receiving element during at least a portion of the barbecuing process.

The method may further comprise said barbecue grill having a displaceable or removable cover selectively residing atop the grilling surface.

The handle may be removed from said body portion prior to placing said displaceable or removable cover atop said grilling surface.

According to another aspect of the invention a method of barbecuing food products comprises providing a barbecue grill having a heat source and grilling surface and a barbecue pan comprising a body portion, said body portion having side walls and a substantially planar mesh base extending therefrom, a receiving element extending from said body portion, said receiving element having a slot configured therein and a handle having a handle base portion removably appended to said receiving element, said handle being provided with a spring-loaded lever and extending lip selectively moveably from said handle base portion by applying pressure to said spring-loaded lever for selectively engaging and withdrawing said extending lip onto and out of said slot, said body portion being sized to reside upon said grilling surface and within said barbecue grill, introducing food products to said body portion and placing said body portion upon said barbecue grill by grasping said barbecue pan by said handle, depressing said spring-loaded lever to remove said lip from said slot and removing said handle from said receiving element during at least a portion of the barbecuing process.

The handle may be removed from said body portion prior to placing a cover atop said grilling surface.

Food products may be removed from the barbecue grill by displacing or removing the barbecue cover, sliding said handle base portion within said receiving element while applying pressure to said spring-loaded lever, releasing said spring-loaded lever enabling said lip to engage said slot and removing said body portion from said grilling surface.

According to another aspect of the invention a method of barbecuing food products comprises providing a barbecue grill having a heat source and grilling surface and a barbecue pan comprising a body portion and a lid, said body portion having side walls and a substantially planar mesh base extending therefrom, a receiving element extending from said body portion, said receiving element having a slot configured therein and a handle having a handle base portion removably appended to said receiving element, said lid sized to fit atop said body portion and having a first lid projection emanating therefrom, said handle being provided with a first spring-loaded lever and first extending lip selectively moveable from said handle base portion by applying pressure to said first spring-loaded lever for selectively engaging and withdrawing said first extending lip into and out of said slot and a second spring-loaded lever and second extending lip selectively moveable from said handle base portion by applying pressure to said second spring-loaded lever for selectively engaging said first extending lip within said first lid projection, introducing food products to said body portion, applying said lid to said body portion by first applying pressure to said second spring-loaded lever and releasing said pressure to said second spring-loaded lever for engaging said second extending lip with said first lid projection and removing said handle from said receiving element during at least a portion of the barbecuing process.

According to another aspect of the invention a barbecue pan comprises a body portion, said body portion having side walls and a substantially planar mesh base extending therefrom, a receiving element extending from said body portion, said receiving element having a slot configured therein and a handle having an open end and passageway within its interior sized to slidably accept said receiving element, said handle being provided with a spring-loaded lever and extending lip moveable by applying pressure to said spring-loaded lever for selectively engaging and withdrawing said extending lip into and out of said slot.

The side walls may also be composed of mesh material.

The handle may be secured to said body portion when said handle slidably receives said receiving element within said passageway and said extending lip extends within said slot.

The handle may be removable from said body portion when said spring-loaded lever is depressed and said extending lip is withdrawn from said slot.

According to another aspect of the invention a barbecue pan comprises a body portion and a lid, said body portion having side walls and a substantially planar mesh base extending therefrom, a receiving element extending from said body portion, said receiving element having a slot configured therein and a handle having an open end and passageway within its interior sized to slidably accept said receiving element, said lid sized to fit atop said body portion and having a first lid projection emanating therefrom, said handle being provided with a first spring-loaded lever and first extending lip moveable by applying pressure to said first spring-loaded lever for selectively engaging and withdrawing said first extending lip into and out of said slot and said receiving element being provided with a second spring-loaded lever and second extending lip moveable by applying pressure to said second spring-loaded lever for selectively engaging said second extending lip with said first lid projection.

The side walls may also be composed of mesh material.

The lid may be fixed to said body portion when said second extending lip engages said first lid projection.

The lid may further comprise a second lid projection extending diametrically opposite said first lid projection.

The body portion may be provided with an extension positioned to receive said second lid projection when said first lid projection is aligned with said handle.

The second lid projection may be pivotable within said extension when said second extending lip disengages from said first lid projection.

According to another aspect of the invention a method of barbecuing food products comprises providing a barbecue grill having a heat source and grilling surface and a barbecue pan comprising a body portion having side walls and a substantially planar mesh base extending therefrom, a receiving element extending from said body portion, said receiving element having a slot configured therein and a handle having an open end and passageway within its interior sized to slidably accept said receiving element, said handle being provided with a spring-loaded lever and extending lip moveable by applying pressure to said spring-loaded lever for selectively engaging and withdrawing said extending lip into and out of said slot, introducing food products to said body portion and placing said barbecue pan upon said barbecue grill by grasping said handle and, thereafter, removing said handle from said receiving element during at least a portion of the barbecuing process.

The barbecue grill may have a displaceable or removable cover selectively atop the grilling surface.

The handle may be removed from said body portion prior to placing said displaceable or removable cover atop said grilling surface.

The barbecue pan may be removed from said grilling surface by slidably inserting said receiving element within said passageway of said handle by first pressing said spring-loaded lever and releasing said spring-loaded lever once said handle has been applied to extend said lip within said slot.

### BRIEF DESCRIPTION OF THE FIGURES

Fig. 1 is a perspective view of a typical grilling pan created pursuant to the present invention;
Fig. 2 is a partial perspective view illustrating the handle removing feature of the present invention;
Fig. 3A and 3B depict top perspective views of the present invention used atop a typical barbecue grill in practicing the present method;
Fig. 3C is a top perspective view showing the barbecue grill of Figs. 3A and 3B with the barbecue top or lid in place during the grilling process;
Fig. 4 is a side view of a further embodiment of the present invention; and
Fig. 5 is a perspective view of another embodiment of a handle-pan interface.

### DETAILED DESCRIPTION OF THE INVENTION

Novel features which are characteristic of the invention, as to organization and method of operation, together with further objects and advantages thereof will be better understood from the following description considered in connection with the accompanying drawings, in which preferred embodiments of the invention are illustrated by way of example. It is to be expressly understood, however, that the drawings are for illustration description only and are not intended as definitions of the limits of the invention. The various features of novelty which characterize the invention are recited with particularity in the claims.

There has been broadly outlined more important features of the invention in the summary above and in order that the detailed description which follows may be better understood, and in order that the present contribution to the art may be appreciated. There are, of course, additional features of the invention that will be described hereinafter and which will form additional subject matter of the claims appended hereto. Those skilled in the art will appreciate that the conception upon which this disclosure is based readily may be utilized as a basis for the designing of other structures, methods and systems for carrying out the several purposes of the present invention. It is important therefore, that claims be regarded as including such equivalent constructions insofar as they do not depart from the spirit and scope of the present invention.

Certain terminology and the derivations thereof may be used in the following description for convenience and reference only, and will not be limiting. For example, words such as "upward," "downward," "left," and "right" refer to directions in the drawings to which reference is made unless otherwise stated. Similar words such as "inward" and "outward" refer to directions toward and away from, respectively, the geometric center of a device or area and designated parts thereof. Reference in the singular tense include the plural and vice versa, unless otherwise noted.

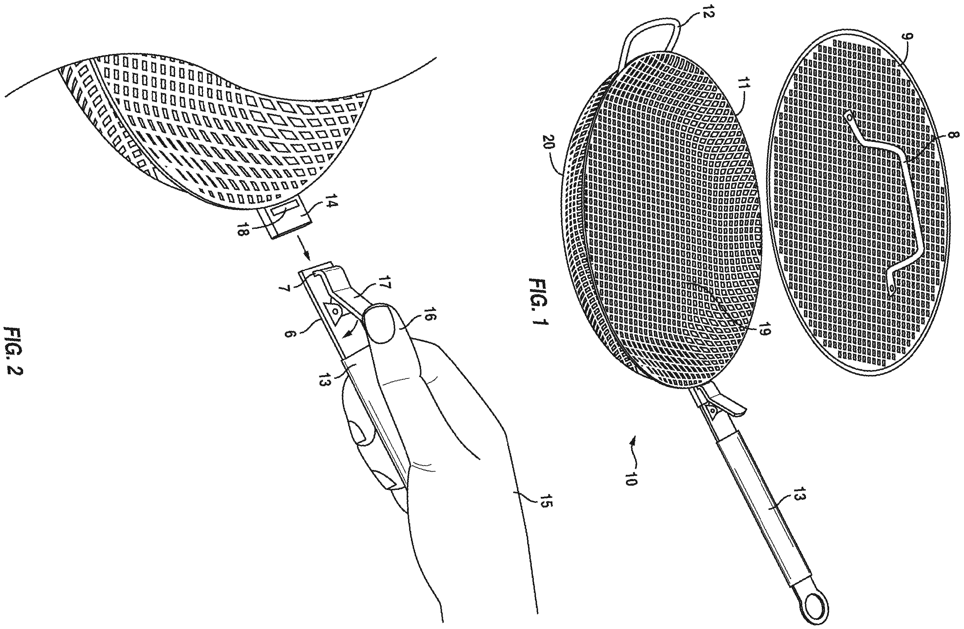

Turning to Fig. 1, barbecue pan 10 is depicted as a preferred embodiment of the present invention. Body portion 11 can be composed of a sheet of perforated metal or composite or a wire mesh which, in either case, provides openings large enough to allow the even conduction of heat from a barbecue cooking source through body portion 11 while preventing small food products from falling therefrom all the while being resistant to the temperatures that characterize barbecue cooking.

At a minimum, substantially planar base 19 is composed of a mesh material. As a preferred embodiment, side walls 20 can also be composed of a mesh material and, in this instance, a smooth transition is created between planar base 19 and side walls 20. As a preferred embodiment, handle 12 can also be employed in the event that one wishes to lift pan 10 from the grilling surface using both handle 12 and handle 13 although, in most instances, handle 12 can be eliminated.

As a further preferred embodiment, top 9 can be employed which, itself, can be composed of mesh material as shown. Handle 8 can be centered within top 9 to enable a user to conveniently lift top 9 from pan 10 as desired.

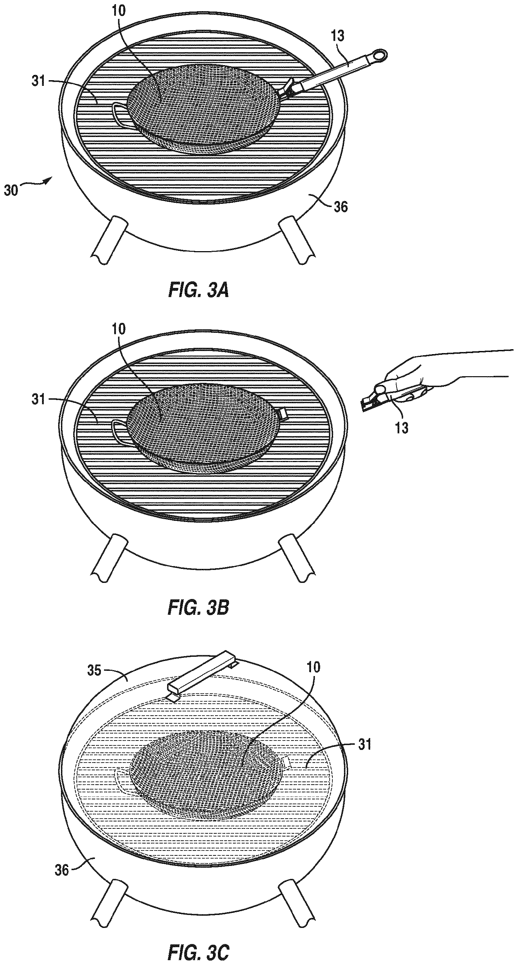

In turning to Fig. 3A, it is contemplated that pan 10, upon receipt of small food items to be cooked (not shown) would be placed upon grilling surface 31 of barbecue grill 30. Charcoal, gas or other heat sources would be located beneath grill 31 for cooking the contents of mesh barbecue pan 10. However, as illustrated in Fig. 3A, when mesh barbecue pan 10 is placed in the center of grilling surface 31, handle 13 would not only be exposed to a heat source located below mesh surface 31 but would also extend beyond the side walls of barbecue 30. Thus, unless one was to adopt the unique features of the present invention, it would be impossible for cover 35 (Fig. 3C) to properly seat atop base portion 36 of barbecue 30.

Insight as to the potential of the present invention can be appreciated by reference to Figs. 2, 3B and 3C. Specifically, as a first embodiment, handle 13 is provided with spring loaded lever 17 for interfacing with receiving element 14. In this configuration, extending lip 7 is selectively movable from handle base portion 6 by applying pressure through thumb 16 of hand 15. Thus, one can engage and detach handle 13 to and from receiving element 14 by selectively engaging lip 7 within slot 18. In doing so, handle 13 can be applied and removed selectively employing only a single hand 15 of a user. This can be important for during the cooking process, mesh body portion 11 of pan 10 can become extremely hot and it may be of great benefit to enable handle 13 to be applied and removed to and from receiving element 14 with a single hand to prevent injury. In some cases there will be enough friction between planar base 19 and grilling surface 31 to facilitate handle application and removal using only a single hand as suggested.

Once handle 13 has been removed as illustrated in Fig. 3B, mesh pan 10 is caused to reside atop grilling surface 31 during the cooking process. If mesh pan 10 is to be removed or its contents shaken or redistributed, top 9 can be applied to pan 10 and handle 13 reinserted upon receiving element 14. In doing so, because handle 13 was not in place during the cooking process, a user need not be concerned with handle 13 becoming uncomfortably or dangerously hot. Of equal importance, as noted in reference to Fig. 3C, once handle 13 has been removed, no impediment persists in applying cover 35 to base 36 as shown.

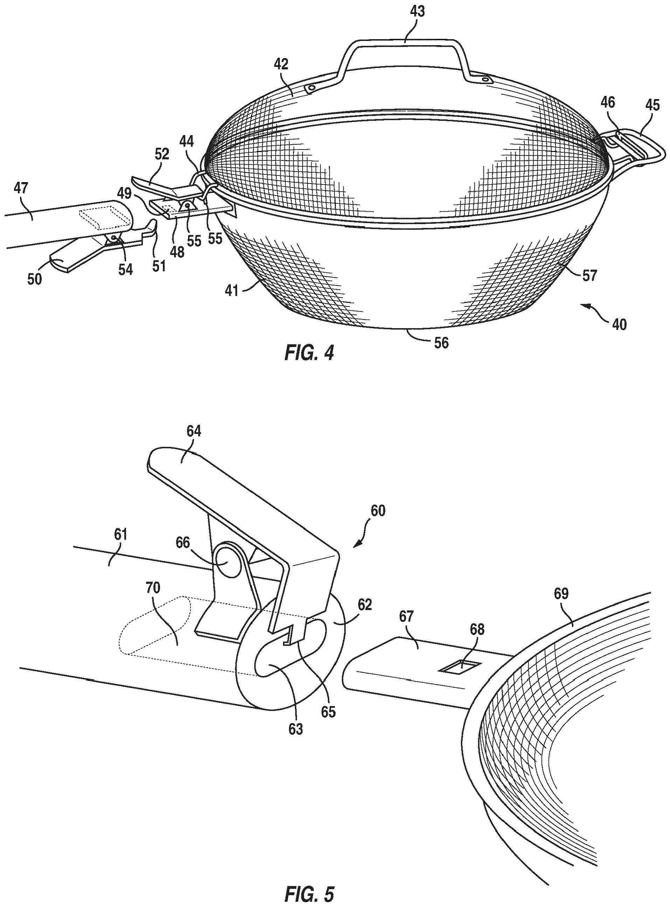

A further embodiment of the present invention is depicted in Fig. 4. In this instance, barbecue pan 40 is shown having body portion 41 and lid 42. The body portion 41 has a substantially planar mesh base 56 and side walls 57 extending therefrom. Receiving element 48 extends from body portion 41 having slot 49 configured therein. Handle 47 has an internal passageway (element 70 of Fig. 5) for receiving element 48. Lid 42 can be provided with handle 43 enabling one to conveniently apply and remove lid 42, sized to fit atop body portion 41. Lid projection 44 is provided emanating therefrom. Handle 47 has spring-loaded lever 50 biased by spring 54 moveable from receiving element 48 by applying pressure to first spring-loaded lever 50 for selectively engaging and withdrawing first extending lip 51 into and out of slot 49. Barbecue pan 40 also is provided with second spring-loaded lever 52 biased through spring 55 and having second extending lip 53 moveable from receiving element 48 by applying pressure to second spring-loaded lever 52 for selectively engaging the second extending lip 53 with first lid projection 44.

Turning back to Fig. 4, it is noted that when second extending lip 53 engages first lid projection 44, lid 42 is fixed to body portion 41. Barbecue pan 40 can also include second lid projection 45 extending diametrically opposite first lid projection 44. Lid 42 can also include extension 46 positioned to receive second lid projection 45 when first lid projection 44 is aligned with the handle. When second lid projection 45 is provided together with extension 46, lid 42 is pivotible when second extending lip 43 disengages from first lid projection 44.

To further illustrate this second alternative removable handle configuration, reference is made to Fig. 5. In this instance, body portion 69 is shown composed of mesh material and having receiving element 67 extending therefrom. Receiving element 69 is provided with slot 68. Handle 61 is provided with open end 63 and passageway 70 (shown in phantom) within its interior sized to slidably accept receiving element 67. Spring-loaded lever 64 biased by spring 66 supported by handle 61 terminating in lip 65 moveable by applying pressure to spring-loaded lever 64 as previously described. In operation, receiving element 67 is slid within interior 70 of handle 61 once spring-loaded lever 64 has been depressed. After handle 61 has engaged receiving element 67 by sliding the later within passageway 70, pressure is removed from lever 64 enabling lip 65 to engage slot 68. There upon, handle 61 is locked in position and cannot be removed unless a user depresses spring-loaded lever 64 thus disengaging lip 65 from slot 68. Upon doing so, handle 61 can be slid away from body portion 69 by sliding receiving element 67 out of passageway 70.

As a result of the above, small food items which would be difficult to cook employing barbecue 30 can now be enjoyed by even the most amateur barbecue griller. The present inventive mesh pan can be easily loaded with food items, applied to a grilling surface and manipulated as needed without concern to its gripping element (handle) becoming uncomfortably or dangerously hot to grasp or in having the pan interfere with placement of the lid upon the base of the barbecue grill.

The above disclosure is sufficient to enable one of ordinary skill in the art to practice the invention, and provides the best mode of practicing the invention presently contemplated by the inventor. While there is provided herein a full and complete disclosure of the preferred embodiments of the invention, it is not desired to limit the invention to the exact construction, dimensions, relationships, or operations as described. Various modifications, alternative constructions, changes and equivalents will readily occur to those skilled in the art and may be employed as suitable without departing from the true spirit and scope of the invention. Such changes might involve alternative materials, components, structural arrangements, sizes, shapes, forms, functions, operational features or the like. Therefore, the above description and illustration should not be considered as limiting the scope of the invention, which is defined by the appended claims.

## Claims

1. A barbecue pan comprising a body portion, said body portion having side walls and a substantially planar mesh base extending therefrom, a receiving element extending from said body portion and a handle removably appended to said receiving element.

2. The barbecue pan of claim 1 wherein said side walls are also composed of mesh material.

3. The barbecue pan of claims 1 or 2 further comprising a lid of mesh material.

4. The barbecue pan of claim 1 or any preceding claim wherein said handle is detachable from said receiving element by employing a single hand of a user.

5. The barbecue pan of any of claims 1 to 4 wherein said receiving portion has a slot configured therein and the handle has a handle base portion removably appended to said receiving element, said handle being provided with a spring-loaded lever and an extending lip selectively moveable from said handle base portion by applying pressure to said spring loaded lever for selectively engaging and withdrawing said extending lip into and out of said slot.

6. A barbecue pan comprising a body portion, said body portion having side walls and a substantially planar mesh base extending therefrom, a receiving element extending from said body portion, said receiving element having a slot configured therein and a handle having a handle base portion removably appended to said receiving element, said handle being provided with a spring-loaded lever and an extending lip selectively moveable from said handle base portion by applying pressure to said spring loaded lever for selectively engaging and withdrawing said extending lip into and out of said slot.

7. The barbecue pan of claim 6 or claim 10 wherein said side walls are also composed of mesh material.

8. The barbecue pan of claim 5 or of claim 6 or claim 7, wherein said handle is secured to said body portion when said handle base portion is received by said receiving element and said extending lip extends within said slot.

9. The barbecue pan of claim 5 or any of claims 6 to 8, wherein said handle is removable from said body portion when said spring-loaded lever is depressed and said extending lip is withdrawn from said slot.

10. The barbecue pan of any of claims 1 to 5 wherein said receiving element has a slot configured therein and a handle having a handle base portion removably appended to said receiving element, said lid sized to fit atop said body portion and having a first lid projection extending therefrom, said handle being provided with a first spring-loaded lever and first extending lip selectively moveable from said handle base portion by applying pressure to said first spring-loaded lever for selectively engaging and withdrawing said first extending lip into and out of said slot and a second spring-loaded lever and second extending lip selectively moveable from said handle base portion by applying pressure to said second spring-loaded lever for selectively engaging said second extending lip within said first lid projection.

11. A barbecue pan comprising a body portion and a lid, said body portion having side walls and a substantially planar mesh base extending therefrom, a receiving element extending from said body portion, said receiving element having a slot configured therein and a handle having a handle base portion removably appended to said receiving element, said lid sized to fit atop said body portion and having a first lid projection extending therefrom, said handle being provided with a first spring-loaded lever and first extending lip selectively moveable from said handle base portion by applying pressure to said first spring-loaded lever for selectively engaging and withdrawing said first extending lip into and out of said slot and a second spring-loaded lever and second extending lip selectively moveable from said handle base portion by applying pressure to said second spring-loaded lever for selectively engaging said second extending lip within said first lid projection.

12. The barbecue pan of claim 10 or claim 11 wherein said lid is fixed to said body portion when said second extending lip engages said first lid projection.

13. The barbecue pan of claim 10 or claim 11 or claim 12 wherein said lid further comprises a second lid projection extending diametrically opposite said first lid projection, and optionally or preferably wherein said body portion is provided with an extension positioned to receive said second lid projection when said first lid projection is aligned with said handle.

14. The barbecue pan of claim 13 wherein said second lid projection is pivotal within said extension when said second extending lip disengages from said first lip projection.

15. A method of barbecuing food products, said method comprising providing a barbecue grill having a heat source and grilling surface and a barbecue pan comprising a body portion, said body portion having side walls and a substantially planar mesh base extending therefrom, a receiving element extending from said body portion, said receiving element having a slot configured therein and a handle having a handle base portion removably appended to said receiving element, said handle being provided with a spring-loaded lever and extending lip selectively moveably from said handle base portion by applying pressure to said spring-loaded lever for selectively engaging and withdrawing said extending lip onto and out of said slot, said body portion being sized to reside upon said grilling surface and within said barbecue grill, introducing food products to said body portion and placing said body portion upon said barbecue grill by grasping said barbecue pan by said handle, depressing said spring-loaded lever to remove said lip from said slot and removing said handle from said receiving element during at least a portion of the barbecuing process.
